# EUROPEAN PATENT SPECIFICATION

(11) **EP 4 493 427 B1**
(45) Date of publication and mention of the grant of the patent: **18.02.2026**
(21) Application number: 23723640.1
(22) Date of filing: 14.03.2023
(51) Int. Cl.: B60K 1/04

(54) **MODULAR ROOF FOR A PUBLIC TRANSPORT VEHICLE**
MODULARES DACH FÜR EIN FAHRZEUG DES ÖFFENTLICHEN PERSONENVERKEHRS
MODULAR ROOF FOR A PUBLIC TRANSPORT VEHICLE

(30) Priority: 15.03.2022 IT 202200005027
(43) Date of publication of application: 22.01.2025
(73) Proprietor: IVECO FRANCE S.A.S., 69200 Vénissieux (FR)
(72) Inventor: NIGNOL, Christophe, 69200 VENISSIEUX (FR)
(74) Representative: Studio Torta S.p.A.
(86) International application number: PCT/IB2023/000154
(87) International publication number: WO 2023/175397

(56) References cited:
- EP-A1- 3 377 347
- KR-A- 20120 060 073
- SE-A1- 1 850 297

## Description

### TECHNICAL FIELD

The present invention concerns a modular roof for a vehicle, in particular a modular roof for a public transport vehicle.

The present invention finds its preferred, although not exclusive, application a roof for storing electrical batteries in an electrical vehicle. Reference will be made to this application by way of example below.

### BACKGROUND OF THE INVENTION

Public transport vehicles such as buses are more and more electrified in order to reduce their pollution emission. Electrified vehicles need electrical batteries to store electrical energy to be used by the vehicle.

It is common to provide such electrical batteries on the roof of the vehicle, in a dedicated space separated by the environment by a cover. Indeed, such allocation of the electrical batteries allows a quick intervention in maintenance and rescue operation, allows an easy conditioning and avoid undesired contact in case of collision with ground or vehicles.

However, electrical batteries varies according to the electrical power needed by the vehicle and its utilities. Accordingly, fixation means for fixing the electrical batteries to the roof and the cover covering these latter may be designed again and modified for each variation of battery dimension.

Indeed, a variation of position of the batteries on the roof of the vehicle must be attentively designed in order to not vary excessively the gravity center that deeply influences the maneuverability of the vehicle.

It is clear therefore that the above operation are time consuming, thereby increasing design costs. Furthermore, the above limits does not allow on an already operative vehicle to easily change the electrical batteries with greater ones.

Therefore, the need is felt to allow the fixation of electrical batteries on a roof of a public transport vehicle in a versatile way in order to allow the fixation of different dimension batteries.

Example of known vehicles are disclosed in SE1850297 A1, EO3377349 A1, KR20120060073 A or EP3377347 A1.

An aim of the present invention is to satisfy the above mentioned needs in a cost-effective and optimized manner.

### SUMMARY OF THE INVENTION

The aforementioned aim is reached by a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:

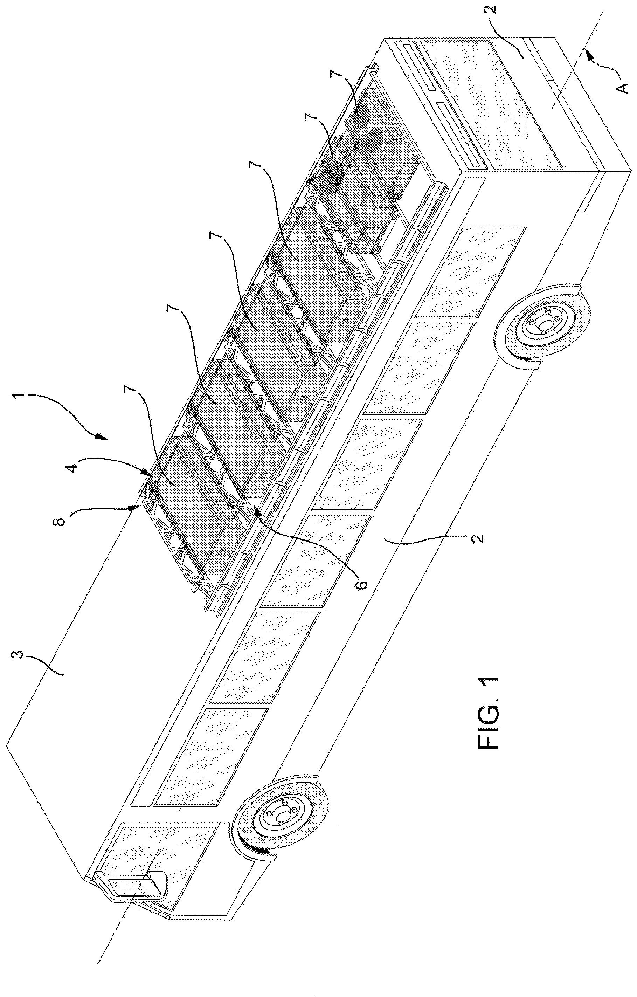

- Figure 1 is a perspective view of a public transport vehicle according to the invention with parts removed for sake of clarity;

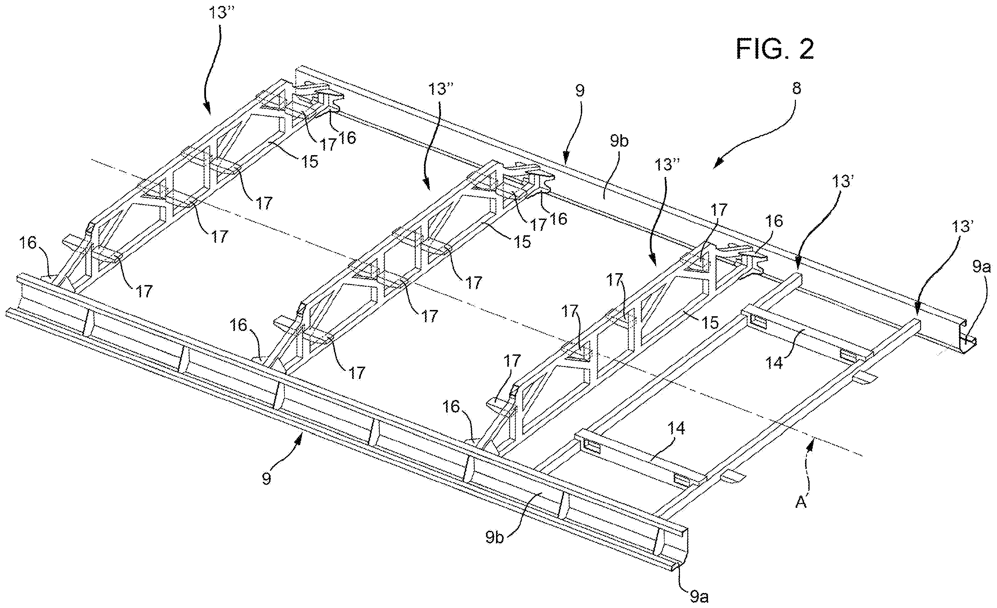

- Figure 2 is a perspective view of a portion of the vehicle according to the invention;

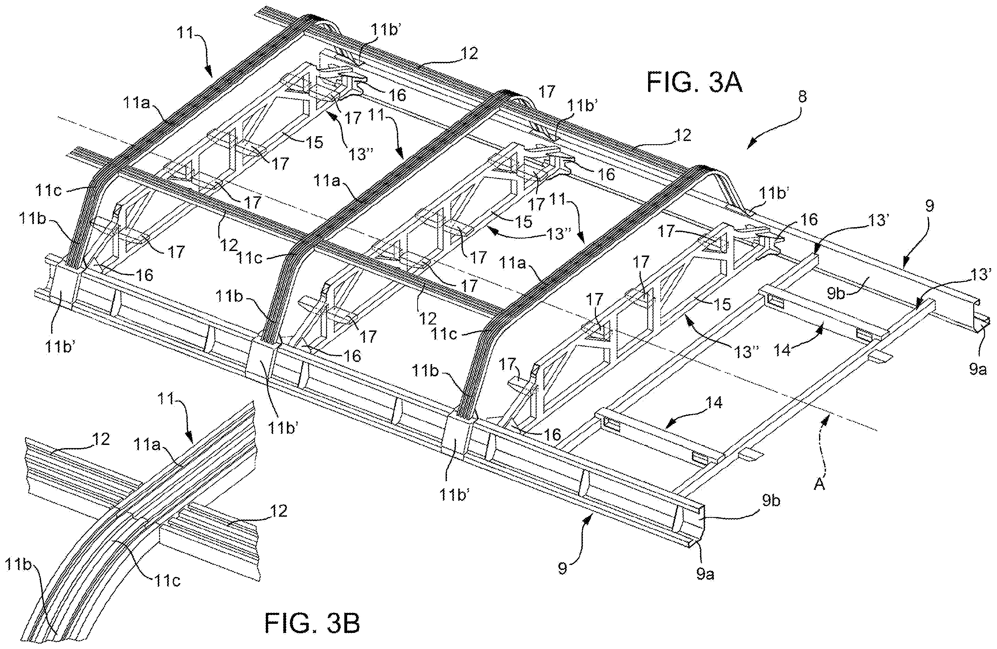

- Figure 3A, 4A and 5 are perspective view with parts in of the vehicle portion of figure 2;
- Figures 3B, 4B are respective enlarged views of a portion of figures 3A, 4A;
- Figure 6A is a transversal section view of a vehicle of figure 1 in a first operative condition;
- Figure 7A is a transversal section view of a vehicle of figure 1 in a second operative condition;

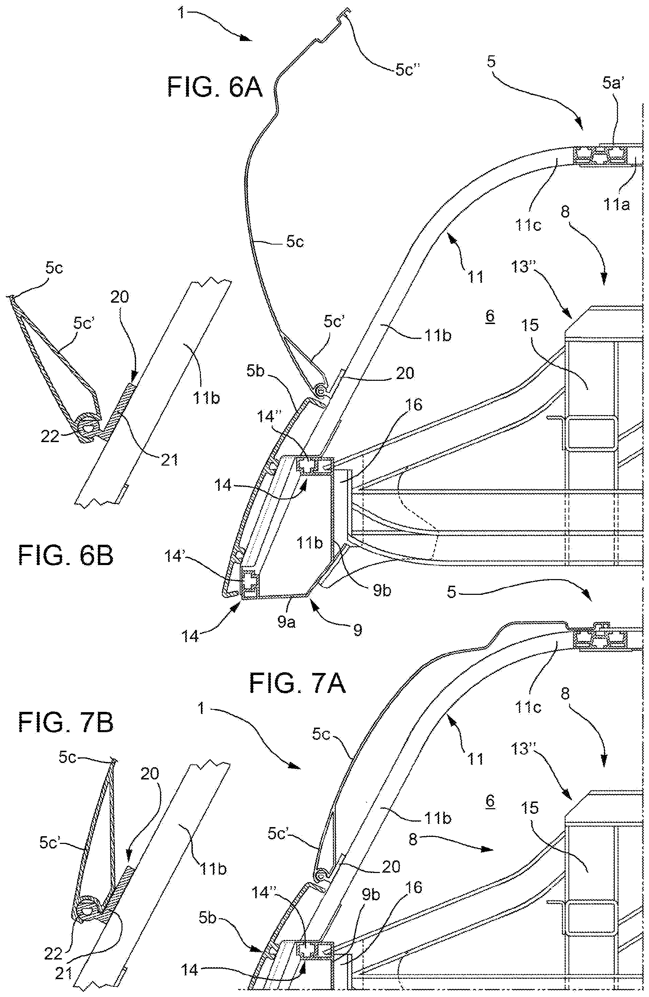

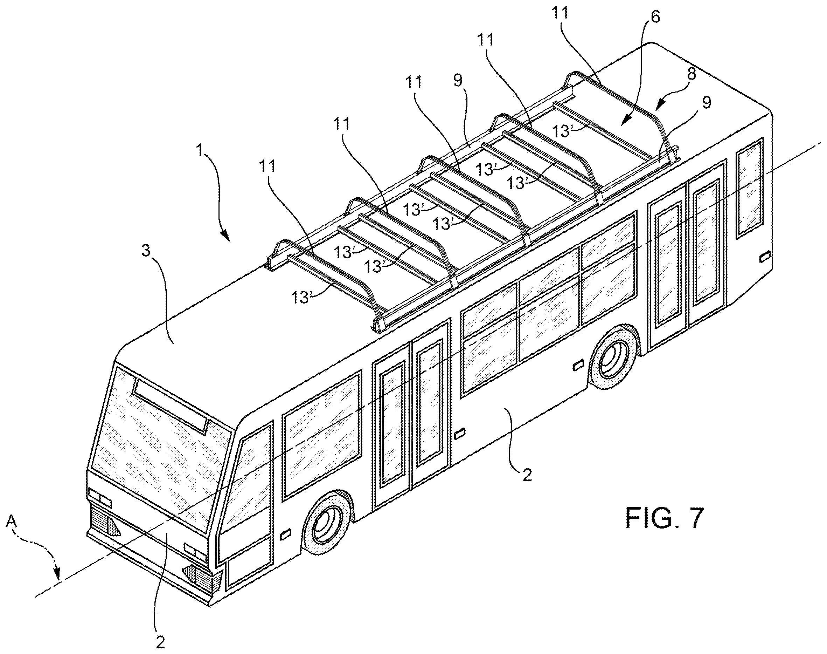

- Figures 6B, 7B are respective enlarged views of a portion of figures 6A, 7A; and
- Figure 7 is a perspective view of a further embodiment of the vehicle according to the invention.

### DETAILED DESCRIPTION OF THE INVENTION

In the attached figures it is shown an exemplarily public transport vehicle 1 comprising a plurality of lateral walls 2, a floor (not shown) and a roof 3 configured to delimit a space (not visible) configured to house passengers, as known.

The vehicle 1 extends along a longitudinal axis A and is provided with a housing 4 for storing a plurality of operative modules 7 carried by roof 3, such as electrical battery modules or conditioning means of the vehicle.

The housing 4 comprises a cover 5, better described in the following, configured to delimit a space 6 suitable for housing the electrical battery modules 7. Clearly, cover 5 is carried by roof 3 in a manner to separate the space 6 with respect to environment, i.e. to avoid that water or dirty elements may penetrate therein.

The cover 5 is carried by a support structure 8 that is fixable to the roof 3 and extends at least on part of the longitudinal extension of this latter, i.e. on longitudinal axis A.

The support structure 8 essentially comprises a pair of side member 9 extending parallel to longitudinal axis A and placed in correspondence of a longitudinal corner of the vehicle 1, i.e. in correspondence of the junction between rood 3 and one of lateral walls 2. Moreover, the side members 9 are preferably equally spaced with respect to longitudinal axis A.

The support structure 8 furthermore comprises a plurality of hoops 11 extending transversally with respect to longitudinal axis A and spaced one with respect to the over along longitudinal axis A. The hoops 11 are connected to the side members 9 and carry the cover 5.

In particular, the hoops 11 extend equally spaced one with respect to the other along longitudinal axis A and above the side members 9. Each hoop 11 is connected to its transversal extremities to a respective side member 9, as detailed in the following.

The support structure 8 furthermore comprises a plurality of support elements 13', 13" extending transversally with respect to longitudinal axis A. The support beams 12 are connected to side members 9 and carry the operative modules 7.

In particular, the support elements 13', 13" are contained in said space and may comprise at least one among:
- a truss element 13" having a vertical extension greater with respect to the side members 9; and/or
- a support beams 13' having a vertical extension smaller with respect to the side members 9.

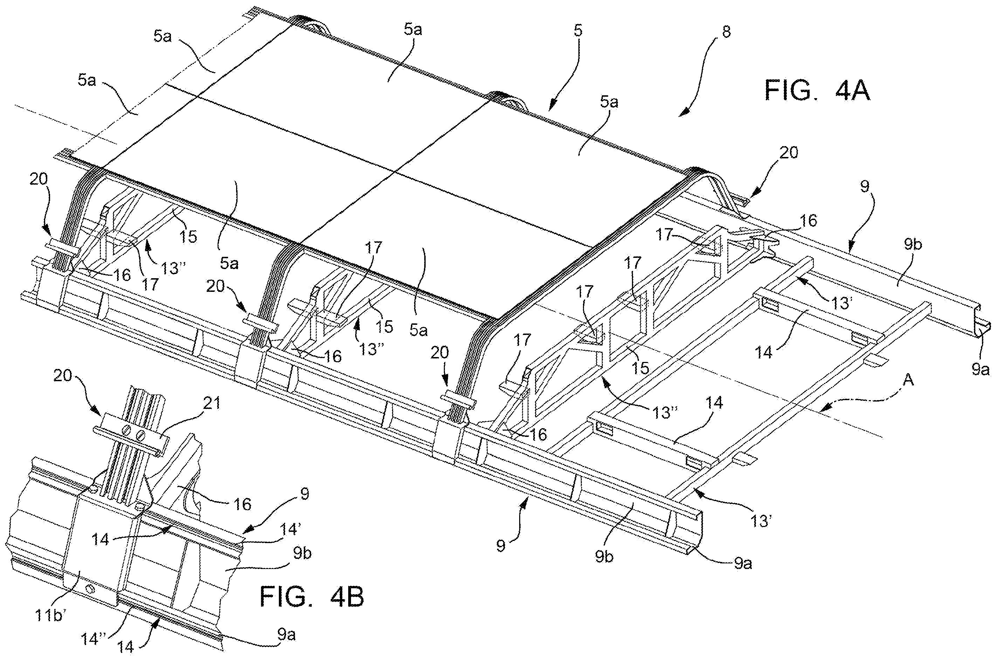

Making reference to figures 4B, 6A, 7A, each side member 9 comprise a fixing portion 9a configured to be fixed to the roof 3 and a cantilevered portion 9b extending along vertical direction, preferably vertically, from fixing portion 9a.

The fixing portion 9a and the cantilevered portion 9b each define at least a guide means 14 configured to allow the fixation of hoops 11. According to the exemplarily shown embodiment, the guide means 14 comprise rails 14', 14" realized integrally within side members 9 and extending along longitudinal axis A. Therefore, preferably, the side members 9 are profiled elements.

In detail, the fixing portion 9a defines a first rail 14' configured to allow the support of hoops 11 while the cantilevered portion 9b defines a second rail 14" configured to allow the support of hoops 11.

In further detail, the first rail 14' is realized on a portion of the fixing portion 9a parallel and adjacent to roof 3 and housed outside space 6 and it is opened on transversal direction opposite to cantilevered portion 9b. The second rail 14" is realized on a vertical extremity of the cantilevered portion and is opened on a side opposite to the fixing portion 9a.

Referring back to hoops 11, each comprises a central portion 11a and a pair of transversal portions 11b. In detail, the transversal portions 11b are configured to be coupled to a respective side member 9 and are inclined with respect to the plane defined by roof 3.

The central portion 11a is preferably parallel to the plane defined by the roof 3 and is vertically distanced with respect to this latter and is jointed to the inclined transversal portions 11 via joint portions 11c that are preferably curved and concave towards space 6.

In particular, the transversal portions 11b each comprises a terminal portion 11b' defining at least a coupling portion configured to allow the fixation of the transversal portion 11b to the at least one guide mean 14. In the disclosed embodiment, such the terminal portion 11b' comprises a pair of flanges designed to cooperate with, respectively, first and second rails 14', 14" and configured to define an opening suitable for housing fixing means, e.g. threaded means, configured to fix the hoop 11 to the side members 9.

The hoops 11 may be longitudinally connected thanks to longitudinal members 12 configured to connected together longitudinally two hoops 11 one with the other. Accordingly, there is a pair of longitudinal members 12 for each pair of hoops 11 to be connected together.

In particular, the longitudinal members 12 connects together the hoops 11 in the central portion 11a thereof, advantageously in proximity of the corner with the joint portions 11c. Advantageously, longitudinal members 12 have a substantially plane shape as the central portions 11a.

Preferably, hoops 11 are realized, except for terminal portions 11b', as profiled elements. Longitudinal members 12 may also be realized as profiled elements.

Referring to support beams 13' they are carried by side members 9, in particular by fixing portion 9a and are advantageously realized as a single profiled element. In particular, such support beams 13' may be jointed to fixing portion 9a thanks to guide means similar to the one described above or fixedly welded to the fixing portion 9a.

In particular, support beams 13' may be longitudinally connected together by longitudinal bars 14. In the disclosed embodiment, the longitudinal bars 14 are two and equally spaced in a transversal direction with respect to longitudinal axis A. Longitudinal bars 14 may be connected in an adjustable manner with respect to support beams 13'.

The truss elements 13" are preferably longitudinally equally spaced on with respect to the other along longitudinal axis A of the vehicle and define a reticulate central portion 15 and a pair of terminal portion 16.

The terminal portions 16 are connected to the side members 9, in particular to cantilevered portion 9b. More preferably, terminal portions 16 are connected to cantilevered portion thanks to guide means 14 similar to the one described above or fixedly welded to the cantilevered portion 9b.

Each central portion 15 extends higher than the cantilevered portion 9b of the side members and comprises a plurality of support portion 17 configured to allow fixation of the operative module 7.

In the disclosed embodiment, the support portions 17 are realized as cantilevered portions extending towards an opposite truss element 15 and preferably equally spaced along transversal direction to longitudinal axis A.

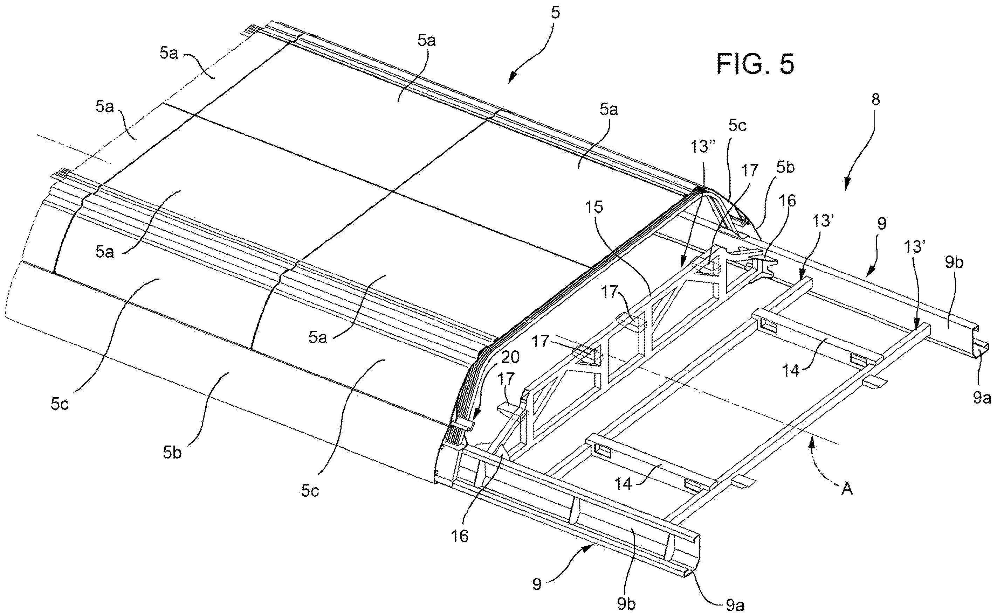

As better shown in figure 5, the cover 5 is modular, i.e. comprises a plurality of portions configured to be carried by structure 8 to allow the mounting of a cover 5 of different dimensions according to extension of support structure 8, in consequence to the number of operative modules 7 contained in housing 3.

In particular, cover portions are carried by side members 9 or by hoops 11 separately in order to vary the extension of cover 5 transversally and/or longitudinally with respect to said longitudinal axis A.

In particular, the cover 5 comprise a plurality of flat walls 5a configured to be carried by the central portion 11a of hoops 11 and to longitudinal members 12 and a plurality of corner walls 5c configured to be carried around the joint portion 11 of the hoops 11.

The cover 5 further comprise at least an acroterion wall 5b configured to be carried by side members 9. In particular, the acroterion wall 5b may be single and extending along the longitudinal extension of housing 4. Preferably, the acroterion wall 5b is fixed via guide means 14 to both fixing portion 9a and cantilevered portion 9b.

The flat walls 5a have a longitudinal extension that is limited along longitudinal axis and is the same of the corner walls 5c. Furthermore, the flat walls 5a have a limited extension in transversal direction. Accordingly, a one row of two flat walls 5a is needed to define longitudinal and transversally the space between two hoops 11, i.e. a single longitudinal member 12.

The flat walls 5a may be connected to the central portion 11a of hoops 11 via guide means 14 similar to the above disclosed one for side members 9 and realized on hoops 11 or longitudinal members 12.

In particular, the corner walls 5c is carried in a movable manner by hoop 11 in order to allow a quick mounting and to allow inspection of operative module. Accordingly, the corner wall 5c is preferably carried by the hoop 11 in order to assume a first, closed, position wherein it separates space 6 from environment and a second, opened, position wherein it allows communication of space 6 with environment.

In particular, the corner wall 5c is hinged to a first extremity 5c'thereof to the hoop 11 and defines a releasable coupling with on an opposite extremity 5c".

In greater detail, the first extremity 5c' is supported by transversal portions 11b thanks to a hinge mechanism 20. The hinge mechanism 20 may comprise a flange 21 configured to be fixed in suitable position on the transversal portion 11b, e.g. thanks to guide means 14. The hinge mechanism 20 defines a hinge 22 between the flange 21 and the first extremity 5c'.

On the opposite side, the second extremity 5c" is fixable to the central portion 11a or to longitudinal members thanks to releasable fixing means (not shown) or by a shape coupling.

Preferably, the support structure 8 elements are realized in metal, such as aluminum or steel. Conversely, the cover 5 walls are preferably realized in composite material or polymeric material.

Figure 7 discloses a further embodiment for support structure 8 provided only with hoops 11 and support beams 13'. In this case the cover 5 portions may be fixed uniquely to hoops 11 thereby avoiding the presence of longitudinal members 12. Internally, the absence of truss elements 13" increases the available space 6 defined by structure 8.

With respect to the above described portions 5a, 5b, 5c of cover, they are carried by hoops 11 and side members 9 without the support of longitudinal members 12.

The operation of the embodiment of the invention as described above is the following.

As shown in figures, the elements of the support structure 8 can be assembled on the side elements 9 in order to regulate their positioning in function of the operative module 7 to be isolated into space 6. The cover 5 can be compound accordingly thanks to different walls disclosed above in order to modulate according to the position of the elements of support structure 8. If there is need to modify the positioning of support structure 8, the cover 5 can be modified accordingly. Furthermore, the presence of corner walls 5c of wall 5 carried in movable manner allows an easy mounting and allows inspection, if needed during maintenance or rescue operations.

In view of the foregoing, the advantages of vehicle according to the invention are apparent.

Thanks to the proposed support structure and cover, the dimension of the housing 3 may be varied, thereby allows regulation of the position of operative module.

In particular, the modularity of cover allows to delimit a space 6 of different dimension with the same elements that may be combined in different manner one with respect to the other.

Accordingly, it is possible to made a fine tuning of the gravity center of the vehicle in order to optimize its maneuverability.

Furthermore, the proposed support structure and cover provides a versatile, scalable and modular way to support different operative modules on the same vehicle.

Similarly to the above, the provide support structure and cover can be used in different typology of vehicle, thereby providing a scale economy in manufacturing the vehicle.

It is clear that modifications can be made to the described vehicle which do not extend beyond the scope of protection defined by the claims.

For example, the disposition, number, shape and material of the support structure elements and of cover elements may vary according to the need of the vehicle.

Indeed, different disposition, shape and numbers of support structure elements and cover elements may be chosen according to the typology of electrical battery/operative modules.

Similarly, corner portion may be connected thanks to a different movable manner to the hoops or the acroterion element may comprise a plurality of portions along longitudinal axis A.

Furthermore, both or only one typology of transversal elements 13', 13" may be provided on a vehicle 1.

## Claims

1. Vehicle (1) for public transport comprising a plurality of walls (2), a floor and a roof (3) delimiting a space into which passengers are housed,
said vehicle (1) extending along a longitudinal axis (A) and comprising a housing (4) carried by said roof (3) and configured to delimit a space (6) into which at least an operative module (7) can be housed, said housing (4) comprising a support structure (8) fixable to said roof (3) and a cover (5) carried by said support structure (8) and configured to delimit said space (6),
said support structure (8) comprising:
- a pair of side members (9) configured to be fixed to the roof (3) and extending along said longitudinal axis (A) direction;
- a plurality of hoops (11) extending transversally along said longitudinal axis (A), each hoop (11) being configured to be fixed to said side members (9); and
- a plurality of support elements (13', 13") extending transversally along said longitudinal axis (A), each support element (13', 13") being configured to be fixed to said side members (9) and to carry said operative module (7),
wherein said cover (5) comprising a plurality of portions (5a, 5b, 5c) connectable to said hoops (11) and/or to said side members (9), said portions (5a, 5b, 5c) being connectable in a separate manner one with respect to the other thereby modifying the transversal and/or longitudinal extension of said cover (5) with respect to said longitudinal axis (A).

2. Vehicle according to claim 1, wherein said portions comprise:
- central portions (5a) and corner portions (5c) carried by said hoops (11); and
- at least an acroterion portion (5b) carried by a respective side members (9).

3. Vehicle according to claim 1 or 2, wherein said hoop (11) comprises a pair of transversal portions (11b), a central portion (11a) and a joint portion (11c) connecting said central and transversal portions (11a, 11b), said transversal portions (11b) each comprises a terminal portion (11b') configured to cooperate with a respective side member (9), said central portion (11a) being parallel to said roof (3) and positioned upper said side members (9).

4. Vehicle according to claim 3 when depending on claim 2, wherein said central portions (5a) are carried by said central portion (11a) of said hoops (11).

5. Vehicle according to claim 4, wherein said structure (8) comprising at least a longitudinal member (12) configured to connect longitudinally two hoops (11), said central portions (5a) being connectable to said longitudinal member (12).

6. Vehicle according to any of claims 3 to 4, wherein said corner portion (5c) is carried said hoops (11) in a movable manner in order to assume a first, closed, position wherein it separates said space (6) from environment and a second, opened, position wherein it allows communication of said space (6) with environment.

7. Vehicle according to claim 6, wherein said corner portion (5c) is hinged via a hinge mechanism (20) to said transversal portions (11b) of said hoops (11).

8. Vehicle according to any of claims 3 to 7, wherein said hoops (11) define guide means (14) configured to allow the fixation of the elements that they carry in an adjustable manner.

9. Vehicle according to any of claims 2 to 8, wherein said side members (9) define guide means (14) configured to allow the fixation of said acroterion element (5b) in an adjustable manner.

10. Vehicle according to claim 8 or 9, wherein said guide means (14) comprise rails (14', 14").

11. Vehicle according to any of claims 2 to 10, wherein each side member (9) comprise a fixation portion (9a) and a cantilevered portion (9b) extending from said fixation portion (9a), said fixation portion (9a) and said cantilevered portion (9b) being configured to carry said acroterion portion (5b), said cantilevered portion (9b) being configured to carry said transversal elements (11).

12. Vehicle according to any of the preceding claims, wherein said transversal elements (13', 13") are housed into said space (6) and comprise at least one among:
- a truss element (13") having a vertical extension greater with respect to the side members (9); and/or
- a support beams (13') having a vertical extension smaller with respect to the side members (9).

13. Vehicle according to claim 12, wherein said truss element (13') comprise a reticulate central portion (15) and a pair of terminal portions (16), said terminal portions (16) cooperating with said side members (9) to allow the fixation of said truss element (13'), said central portion (15) defining a plurality of support portions (17) configured to support said operative module (7).

14. Vehicle according to claim 12 or 13, wherein said support beams (13') comprise profiled elements connecting together said side members (9).

15. Vehicle according to claim 14, further comprising longitudinal bars (14) connecting together in longitudinal direction a pair of support beams (13').

16. Vehicle according to any of the preceding claims, wherein said side members (9) and at least part of said hoops (11) are profiled elements.

17. Vehicle according to any of the preceding claims wherein said side members (9) and said hoops (11) are realized in metallic material.

18. Vehicle according to any of the preceding claims wherein said cover (5) is realized in composite or polymeric material.

## Patentansprüche

1. Fahrzeug (1) für den öffentlichen Verkehr, umfassend eine Vielzahl von Wänden (2), einen Boden und ein Dach (3), die einen Raum begrenzen, in dem Passagiere untergebracht sind,
wobei sich das Fahrzeug (1) entlang einer Längsachse (A) erstreckt und ein Gehäuse (4) umfasst, das von dem Dach (3) getragen wird und konfiguriert ist, um einen Raum (6) zu begrenzen, in dem mindestens ein Betriebsmodul (7) untergebracht werden kann, wobei das Gehäuse (4) eine Stützstruktur (8), die an dem Dach (3) befestigt werden kann, und eine Abdeckung (5) umfasst, die von der Stützstruktur (8) getragen wird und konfiguriert ist, um den Raum (6) zu begrenzen,
wobei die Stützstruktur (8) Folgendes umfasst:
- ein Paar von Seitenelementen (9), die konfiguriert sind, um an dem Dach (3) befestigt zu werden, und sich entlang der Richtung der Längsachse (A) erstrecken;
- eine Vielzahl von Bügeln (11), die sich quer entlang der Längsachse (A) erstrecken, wobei jeder Bügel (11) konfiguriert ist, um an den Seitenelementen (9) befestigt zu werden; und
- eine Vielzahl von Stützelementen (13', 13"), die sich quer entlang der Längsachse (A) erstrecken, wobei jedes Stützelement (13', 13") konfiguriert ist, um an den Seitenelementen (9) befestigt zu werden und das Betriebsmodul (7) zu tragen,
wobei die Abdeckung (5) eine Vielzahl von Abschnitten (5a, 5b, 5c) umfasst, die mit den Bügeln (11) und/oder mit den Seitenelementen (9) verbunden werden können, wobei die Abschnitte (5a, 5b, 5c) in einer separaten Weise miteinander verbunden werden können, wodurch die Quer- und/oder Längserstreckung der Abdeckung (5) in Bezug auf die Längsachse (A) modifiziert wird.

2. Fahrzeug nach Anspruch 1, wobei die Abschnitte Folgendes umfassen:
- Mittelabschnitte (5a) und Eckabschnitte (5c), die von den Bügeln (11) getragen werden; und
- mindestens einen Akroterion-Abschnitt (5b), der von einem jeweiligen Seitenelement (9) getragen wird.

3. Fahrzeug nach Anspruch 1 oder 2, wobei der Bügel (11) ein Paar von Querabschnitten (11b), einen Mittelabschnitt (11a) und einen Verbindungsabschnitt (11c) umfasst, der die Mittel- und Querabschnitte (11a, 11b) verbindet, wobei die Querabschnitte (11b) jeweils einen Endabschnitt (11b') umfassen, der konfiguriert ist, um mit einem jeweiligen Seitenelement (9) zusammenzuwirken, wobei der Mittelabschnitt (11a) parallel zu dem Dach (3) und oberhalb der Seitenelemente (9) positioniert ist.

4. Fahrzeug nach Anspruch 3, wenn abhängig von Anspruch 2, wobei die Mittelabschnitte (5a) von dem Mittelabschnitt (11a) der Bügel (11) getragen werden.

5. Fahrzeug nach Anspruch 4, wobei die Struktur (8) mindestens ein Längselement (12) umfasst, das konfiguriert ist, um zwei Bügel (11) in Längsrichtung zu verbinden, wobei die Mittelabschnitte (5a) mit dem Längselement (12) verbunden werden können.

6. Fahrzeug nach einem der Ansprüche 3 bis 4, wobei der Eckabschnitt (5c) von den Bügeln (11) in einer beweglichen Weise getragen wird, um eine erste, geschlossene Position einzunehmen, in der er den Raum (6) von der Umgebung trennt, und eine zweite, geöffnete Position, in der er eine Verbindung des Raums (6) mit der Umgebung ermöglicht.

7. Fahrzeug nach Anspruch 6, wobei der Eckabschnitt (5c) über einen Scharniermechanismus (20) an den Querabschnitten (11b) der Bügel (11) angelenkt ist.

8. Fahrzeug nach einem der Ansprüche 3 bis 7, wobei die Bügel (11) Führungsmittel (14) definieren, die konfiguriert sind, um die Befestigung der Elemente, die sie tragen, in einer einstellbaren Weise zu ermöglichen.

9. Fahrzeug nach einem der Ansprüche 2 bis 8, wobei die Seitenelemente (9) Führungsmittel (14) definieren, die konfiguriert sind, um die Befestigung des Akroterion-Elements (5b) in einer einstellbaren Weise zu ermöglichen.

10. Fahrzeug nach Anspruch 8 oder 9, wobei die Führungsmittel (14) Schienen (14', 14") umfassen.

11. Fahrzeug nach einem der Ansprüche 2 bis 10, wobei jedes Seitenelement (9) einen Befestigungsabschnitt (9a) und einen freitragenden Abschnitt (9b) umfasst, der sich von dem Befestigungsabschnitt (9a) erstreckt, wobei der Befestigungsabschnitt (9a) und der freitragende Abschnitt (9b) konfiguriert sind, um den Akroterion-Abschnitt (5b) zu tragen, wobei der freitragende Abschnitt (9b) konfiguriert ist, um die Querelemente (11) zu tragen.

12. Fahrzeug nach einem der vorhergehenden Ansprüche, wobei die Querelemente (13', 13") in dem Raum (6) untergebracht sind und mindestens eines umfassen von:
- einem Trägerelement (13") mit einer größeren vertikalen Erstreckung als die Seitenelemente (9); und/oder
- einem Stützbalken (13') mit einer kleineren vertikalen Erstreckung als die Seitenelemente (9).

13. Fahrzeug nach Anspruch 12, wobei das Trägerelement (13') einen netzartigen Mittelabschnitt (15) und ein Paar von Endabschnitten (16) umfasst, wobei die Endabschnitte (16) mit den Seitenelementen (9) zusammenwirken, um die Befestigung des Trägerelements (13') zu ermöglichen, wobei der Mittelabschnitt (15) eine Vielzahl von Stützabschnitten (17) definiert, die konfiguriert sind, um das Betriebsmodul (7) zu stützen.

14. Fahrzeug nach Anspruch 12 oder 13, wobei die Stützbalken (13') Profilelemente umfassen, die die Seitenelemente (9) miteinander verbinden.

15. Fahrzeug nach Anspruch 14, ferner umfassend Längsstangen (14), die in Längsrichtung ein Paar von Stützbalken (13') miteinander verbinden.

16. Fahrzeug nach einem der vorhergehenden Ansprüche, wobei die Seitenelemente (9) und mindestens ein Teil der Bügel (11) Profilelemente sind.

17. Fahrzeug nach einem der vorhergehenden Ansprüche, wobei die Seitenelemente (9) und die Bügel (11) aus metallischem Material hergestellt sind.

18. Fahrzeug nach einem der vorhergehenden Ansprüche, wobei die Abdeckung (5) aus Verbundmaterial oder Polymermaterial hergestellt ist.

## Revendications

1. Véhicule (1) de transport public comprenant une pluralité de parois (2), un plancher et un toit (3) délimitant un espace dans lequel des passagers sont accueillis,
ledit véhicule (1) s'étendant selon un axe longitudinal (A) et comprenant un boîtier (4) porté par ledit toit (3) et configuré pour délimiter un espace (6) dans lequel au moins un module fonctionnel (7) peut être accueilli, ledit boîtier (4) comprenant une structure de support (8) pouvant être fixée audit toit (3) et un couvercle (5) porté par ladite structure de support (8) et configuré pour délimiter ledit espace (6),
ladite structure de support (8) comprenant :
- une paire d'éléments latéraux (9) configurés pour être fixés au toit (3) et s'étendant le long de la direction dudit axe longitudinal (A) ;
- une pluralité d'arceaux (11) s'étendant transversalement le long dudit axe longitudinal (A), chaque arceau (11) étant configuré pour être fixé auxdits éléments latéraux (9) ; et
- une pluralité d'éléments de support (13', 13") s'étendant transversalement le long dudit axe longitudinal (A), chaque élément de support (13', 13") étant configuré pour être fixé auxdits éléments latéraux (9) et pour porter ledit module fonctionnel (7),
dans lequel ledit couvercle (5) comprenant une pluralité de parties (5a, 5b, 5c) pouvant être reliées auxdits arceaux (11) et/ou auxdits éléments latéraux (9), lesdites parties (5a, 5b, 5c) pouvant être reliées d'une manière distincte les unes par rapport aux autres en modifiant ainsi l'extension transversale et/ou longitudinale dudit couvercle (5) par rapport audit axe longitudinal (A).

2. Véhicule selon la revendication 1, dans lequel lesdites parties comprennent :
- des parties centrales (5a) et des parties d'angle (5c) supportées par lesdits arceaux (11) ; et
- au moins une partie d'acrotère (5b) portée par un élément latéral (9) respectif.

3. Véhicule selon la revendication 1 ou 2, dans lequel ledit arceau (11) comprend une paire de parties transversales (11b), une partie centrale (11a) et une partie d'articulation (11c) reliant lesdites parties centrales et transversales (11a, 11b), lesdites parties transversales (11b) comprenant chacune une partie terminale (11b') configurée pour coopérer avec un élément latéral (9) respectif, ladite partie centrale (11a) étant parallèle audit toit (3) et positionnée au-dessus desdits éléments latéraux (9).

4. Véhicule selon la revendication 3, dépendant de la revendication 2, dans lequel les parties centrales (5a) sont portées par ladite partie centrale (11a) desdits arceaux (11).

5. Véhicule selon la revendication 4, dans lequel ladite structure (8) comprend au moins un élément longitudinal (12) configuré pour relier longitudinalement deux arceaux (11), lesdites parties centrales (5a) pouvant être reliées audit élément longitudinal (12).

6. Véhicule selon l'une quelconque des revendications 3 à 4, dans lequel ladite partie d'angle (5c) est portée d'une façon mobile par lesdits arceaux (11) afin d'adopter une première position fermée dans laquelle elle sépare ledit espace (6) de l'environnement et une seconde position ouverte dans laquelle elle permet la communication dudit espace (6) avec l'environnement.

7. Véhicule selon la revendication 6, dans lequel ladite partie d'angle (5c) est articulée via un mécanisme de charnière (20) auxdites parties transversales (11b) desdits arceaux (11).

8. Véhicule selon l'une quelconque des revendications 3 à 7, dans lequel lesdits arceaux (11) définissent des moyens de guidage (14) configurés pour permettre la fixation des éléments qu'ils portent d'une manière réglable.

9. Véhicule selon l'une quelconque des revendications 2 à 8, dans lequel lesdits éléments latéraux (9) définissent des moyens de guidage (14) configurés pour permettre la fixation dudit élément d'acrotère (5b) d'une manière réglable.

10. Véhicule selon la revendication 8 ou 9, dans lequel lesdits moyens de guidage (14) comprennent des rails (14', 14").

11. Véhicule selon l'une quelconque des revendications 2 à 10, dans lequel chaque élément latéral (9) comprend une partie de fixation (9a) et une partie en porte-à-faux (9b) s'étendant à partir de ladite partie de fixation (9a), ladite partie de fixation (9a) et ladite partie en porte-à-faux (9b) étant configurées pour porter ladite partie d'acrotère (5b), ladite partie en porte-à-faux (9b) étant configurée pour porter lesdits éléments transversaux (11).

12. Véhicule selon l'une quelconque des revendications précédentes, dans lequel lesdits éléments transversaux (13', 13") sont accueillis dans ledit espace (6) et comprennent au moins l'un des éléments suivants :
- un élément d'armature (13") présentant une extension verticale supérieure par rapport aux éléments latéraux (9) ; et/ou
- une poutre de support (13') ayant une extension verticale inférieure par rapport aux éléments latéraux (9).

13. Véhicule selon la revendication 12, dans lequel ledit élément d'armature (13') comprend une partie centrale réticulée (15) et une paire de parties terminales (16), lesdites parties terminales (16) coopérant avec lesdits éléments latéraux (9) pour permettre la fixation dudit élément d'armature (13'), ladite partie centrale (15) définissant une pluralité de parties de support (17) configurées pour supporter ledit module fonctionnel (7).

14. Véhicule selon la revendication 12 ou 13, dans lequel lesdites poutres de support (13') comprennent des éléments profilés reliant ensemble lesdits éléments latéraux (9).

15. Véhicule selon la revendication 14, comprenant en outre des barres longitudinales (14) reliant ensemble dans une direction longitudinale une paire de poutres de support (13').

16. Véhicule selon l'une quelconque des revendications précédentes, dans lequel lesdits éléments latéraux (9) et au moins une partie desdits arceaux (11) sont des éléments profilés.

17. Véhicule selon l'une quelconque des revendications précédentes dans lequel lesdits éléments latéraux (9) et lesdits arceaux (11) sont réalisés en matériau métallique.

18. Véhicule selon l'une quelconque des revendications précédentes dans lequel ledit couvercle (5) est réalisé en matériau composite ou polymère.
